# EUROPEAN PATENT APPLICATION

(11) **EP 4 040 656 A1**
(43) Date of publication of application: **10.08.2022**
(21) Application number: 21155776.4
(22) Date of filing: 08.02.2021
(51) Int. Cl.: H02M 1/00, H02M 1/12, H02M 7/5387, H02M 1/32

(54) **INTERLEAVED POWER CONVERTER**

(71) Applicant: Siemens Aktiengesellschaft, 80333 München (DE)
(72) Inventor: Robinson, Jonathan, 90489 Nürnberg (DE)

(57) **Abstract**

An interleaved power converter having two or more parallel converter arms with a coupled inductor having a winding for and connected to each of the converter arms, comprises a bypass switch for each of the windings and a control unit arranged to activate the bypass switch for an inactive converter arm.

## Description

The present invention relates to a power converter arranged and operated as an interleaved single-phase or multi-phase converter for conversion between alternating current (AC) and direct current (DC) in any direction or with bidirectional power flow.

Interleaving is known as using a parallel combination of two or more sets of power electronic elements that form a converter, connected to a common filter element. The power semiconductors of said sets are operated out of phase by 360° / n, where n is the number of parallel sets. The resulting current has a smaller peak-to-peak variation and a frequency n times as large as the individual converter currents, resulting in a smaller peak-to-peak variation than would result from a single converter, requiring less capacitance for the same output ripple voltage. Thus, interleaved converters offer the possibility to reduce the volume and weight of inductive components. This reduction may be further enhanced by using coupled inductors.

When a fault occurs on any of the sets of elements that form one of the parallel converters it is important that the other converters and thus the interleaved converter as a whole can continue operating. Removing any converter from operation results in no EMF in the associated winding of the coupled inductor, possibly leading to high common mode flux flowing through the whole inductor and saturating the core.

The objective of the present invention is to provide an improved interleaved power converter that is equipped to handle a fault in one or more of its parallel converters and thus equipped to alleviate the disadvantage associated with such a fault mentioned above.

An interleaved power converter for conversion between alternating current and direct current in accordance with the invention comprises DC terminals and AC terminals for connecting the interleaved power converter with supplies and loads. The DC terminals are connected by a DC link comprising one or more capacitors. The interleaved power converter further comprises at least two converter arms being arranged parallel to each other and parallel to the DC link. The converter arms in turn each comprise at least two semiconductor switches. These semiconductor switches can form a half-bridge circuit.

The interleaved power converter further comprises a control unit arranged to control the semiconductor switches for interleaved power converter operation. As is known from the art, interleaved power converter operation includes switching the semiconductors in a way that results in a fixed phase shift between switching times of analogous semiconductor switches of two different converter arms. The magnitude of the phase shift is 360 ° / n, where n is the number of converter arms of the power converter that are associated with a single phase of the power converter. Depending on which two converter arms are compared the phase shift may be an integer multiple of 360 ° / n.

The interleaved power converter further comprises a coupled inductor having a winding for each of the converter arms, a first terminal of each of the windings being connected to a respective converter arm and the second terminals of the windings being interconnected. If the interleaved power converter is a multi-phase converter, it comprises a coupled inductor for each of the phases wherein each such inductor is formed from windings associated with the converter arms that form its respective phase.

For at least one if the windings the interleaved power converter comprises a bypass switch. The bypass switch is arranged in parallel to that winding.

The bypass switch allows forming a low-impedance freewheeling current path for the winding. The current induced in that winding by other windings that are part of the same coupled inductor will then act to oppose any changes of the magnetic field. In this way common mode flux in the coupled inductor is avoided almost completely and core saturation does not occur.

Further features that may be added alone or together in exemplary embodiments of the invention include:
The interleaved power converter may be a single phase converter. In that case all of its converter arms are associated with that single phase and the interleaved power converter comprises one coupled inductor.

Alternatively the interleaved power converter may be a multi-phase converter, e.g. a three-phase converter. In that case the interleaved power converter comprises at least two converter arms per phase, i.e. at least 6 converter arms in the three-phase case. The converter arms are still arranged parallel to each other and parallel to the DC link but in a typical embodiment the interleaved power converter comprises a coupled inductor for each of its phases. The second terminals of the windings of the converter arms associated with the same phase are interconnected while the second terminals of the windings of the converter arms associated with different phases are not directly connected. In the three phase example, the interleaved power converter having six converter arms comprises three coupled inductors with two windings each.

In an advantageous embodiment the interleaved power converter comprises a bypass switch for each of the windings wherein the bypass switch is arranged in parallel to its respective winding. In this embodiment, each of the windings can be separately short-circuited as needed.

The control unit may be arranged to detect a failing converter arm and is further arranged upon detection of a failing converter arm to set the bypass switch of the winding associated with the failing converter arm to a conducting state. In this way high common mode flux flowing through the inductor, saturating the core of the inductor resulting from the missing EMF in the winding associated with the failing converter arm can be avoided when that converter arm is removed from operation.

Alternatively or additionally the control unit may be arranged to detect if the current operating power level is below a power threshold. If it detects this to be the case it may be further arranged to select one or more converter arms and deactivate these converter arms by disabling the switching of the semiconductor switches of these converter arms and setting the bypass switch of the windings associated with these converter arms to a conducting state. In other words the control unit switches off the semiconductor switches of these converter arms and switches on the respective bypass switches. In this embodiment the interleaved power converter can advantageously turn off converter arms when operating at low power, reducing losses and increasing operating efficiency.

The bypass switch or bypass switches may be mechanical switches, particularly vacuum switches. While not as fast as semiconductor switches, mechanical switches automatically provide the AC blocking capability that is required for the bypass switch operation and are comparatively robust. Additionally they have a very low electric resistance and are thus advantageous in high power applications where they generate very low losses. If a faster switch operation of the bypass switches is desired, the bypass switch or switches may be semiconductor switches instead. In this case AC blocking capability must be ensured, for example by using pairs of anti-serial IGBTs.

The control unit may be arranged to interrupt operation of the converter upon detecting a failing converter arm and restarting operation after a short delay. In this way the converter may be returned to operational status with a reduced number of converter arms when activating the bypass switch or bypass switches cannot be done quickly enough to ensure that the coupled inductor remains operational. Alternatively the control unit may be arranged to continue operation directly.

The control unit may be arranged upon detecting a failing converter arm to change the phase shift used for the parallel converter arms to a phase shift associated with the remaining number of functional converter arms, particularly 360 ° / n, where n is the remaining number of functional converter arms. In this way the converter continues operating seamlessly as if it started out with the remaining number of parallel converter arms. In a multi-phase converter only the number of converter arms per phase is relevant.

The bypass switch or bypass switches may have a current rating equal to or higher than the current rating of the interleaved power converter.

The control unit may be arranged upon detecting a failing converter arm to reduce the maximum available power of the power converter. By adapting the maximum power to a reduced number of converter arms the remaining converter arms will continue to operate at or below their own power rating rather than exceed it.

As already described, the interleaved power converter may be a multi-phase converter wherein the converter arms form a first phase circuit and the power converter comprises a second and third phase circuit, the second and third phase circuits each comprising second and third converter arms having second and third windings.

Embodiments of the present invention are now described with reference to the accompanying drawings to which the invention is not limited.
Fig. 1 depicts a block diagram of a three phase interleaved converter of the prior art;
Fig. 2 depicts the converter arms used in the converter;
Fig. 3 depicts a single phase interleaved inverter according to a first embodiment;
Fig. 4 depicts a three phase interleaved inverter according to a second embodiment;
Fig. 5 is a diagram showing the simulated effects of removing a converter arm from operation on the output AC currents in the second embodiment;
Fig. 6 is a diagram showing the simulated effects of removing a converter arm from operation on the arm currents of one phase;
Fig. 7 is a diagram showing the simulated effects of removing a converter arm from operation on the flux.

The illustrations of the drawings are in schematic form. It is noted that in different figures, similar or identical elements use the same reference signs.

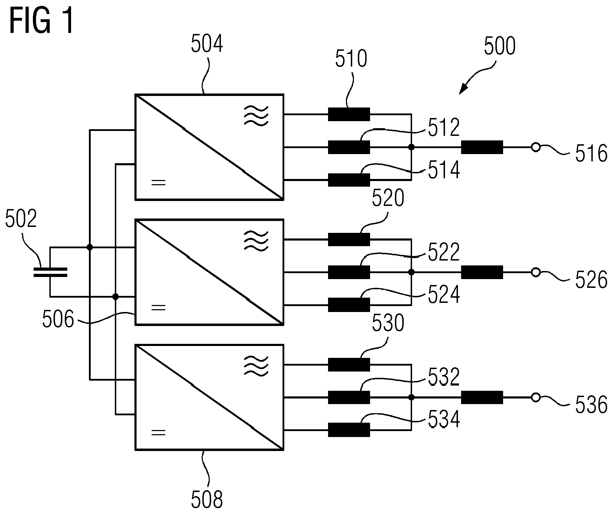

Fig. 1 shows a block diagram of a three phase interleaved DC/AC converter 500 of the prior art with three parallel converter arms per phase. In a first phase, a three-arm inverter 504 is connected to a DC supply 502 at its input terminals. The three output terminals are connected each to one inductivity 510, 512, 514, the far sides of which are joined and connected to an AC terminal 516 for the first phase. In a similar manner, for a second phase a three-arm inverter 506 is connected to the DC supply 502 at its input terminals. The three output terminals are connected each to one inductivity 520, 522, 524, the far sides of which are joined and connected to an AC terminal 526 for the second phase. For a third phase a three-arm inverter 508 is connected to the DC supply 502 at its input terminals and the three output terminals are connected each to one inductivity 530, 532, 534, the far sides of which are joined and connected to an AC terminal 536 for the third phase.

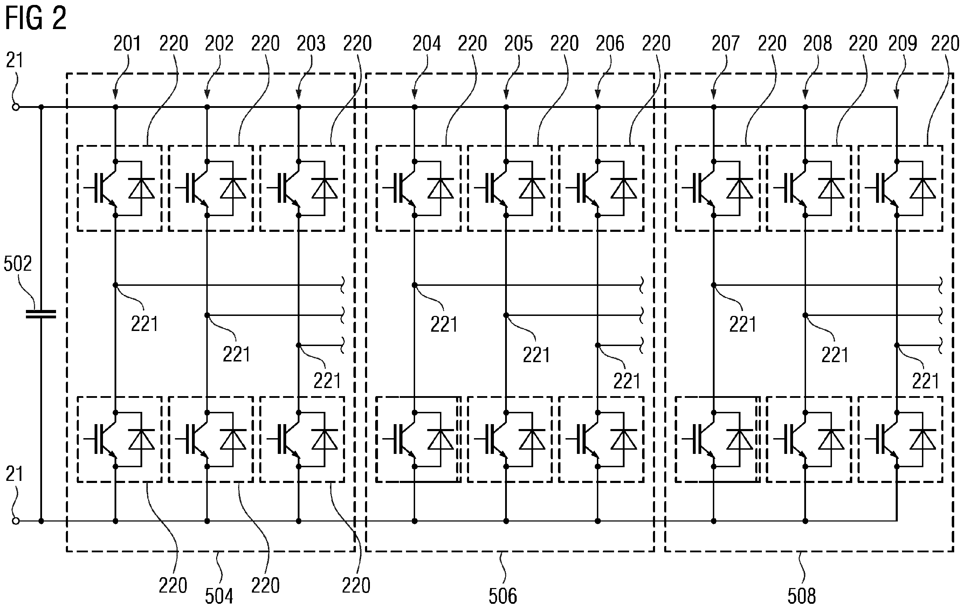

Fig. 2 shows the converter arms 201...209 of converter 500 which form each of the three-arm inverters 504, 506, 508. Each converter arm 201...209 is connected in parallel to the DC supply 502 and comprises two IGBTs 220 that form a half-bridge. The middle terminal 221 of each half-bridge connects to one of the inductivities 510...534. Fig. 2 shows that with respect to the DC supply 502 and the DC terminals 21 of the power converter 500 each of the converter arms 201...209 is connected identically. The differentiation into the phases is achieved by the connection of the middle terminal 221 to the respective inductors.

Converter 500 comprises a control unit that is not shown in the figures which is arranged to control the IGBTs 220 to facilitate interleaved converter operation. Each of the converter arms 201...209 is controlled to operate in a pulse-width-modulated mode to convert between DC and AC current. Within each of the phases the switching times of analogous IGBTs 220, for example of the upper IGBTs 220, are controlled to be out of phase by 360° / the number of converter arms 201...209 in this phase, that is by 120° in the present example.

Thus, the differentiation of the converter arms 201...209 within each phase is accomplished by the control unit that switches the IGBTs 220 with a specific phase difference. This specific phase difference is used within each phase while between the converter arms 201...209 of different phases no specific phase relation is necessary.

The example of figs. 1 and 2 shows a three-phase interleaved power converter with three converter arms 201...209 for each phase. In other embodiments an interleaved converter can comprise a single or other number of phases and two, three, four or more converter arms 201...209 per phase. The resulting number of converter arms 201...209 is the number of phases multiplied by the number of converter arms 201...209 per phase.

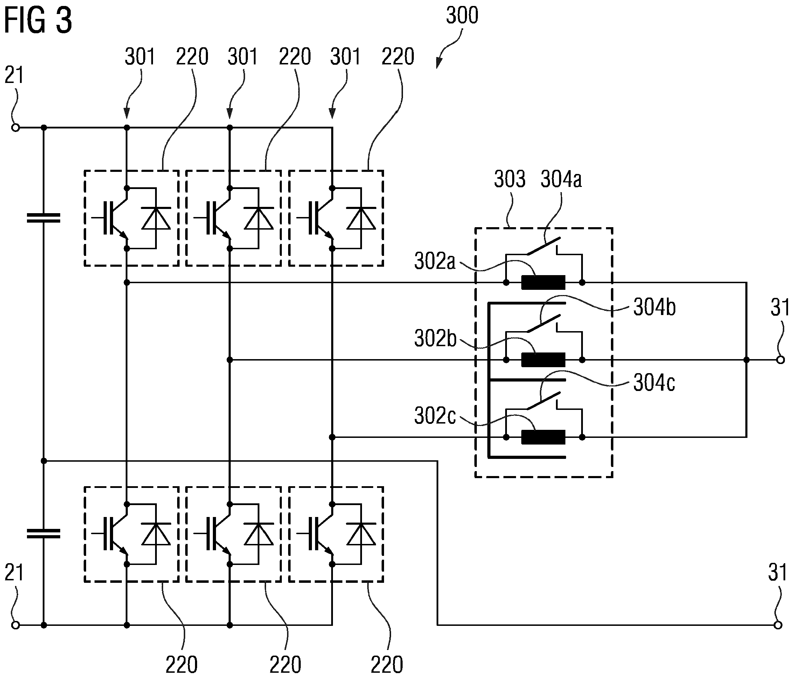

Fig. 3 shows an embodiment of the present invention in the form of a single phase interleaved power converter 300. It comprises a DC link in the form of two series capacitors connecting the DC terminals 21 of converter 300 and three parallel converter arms 301. The converter arms 301 are built in the same way as converter arms 201...209 of fig. 2, i.e. they comprise two IGBTs 220 each that form a half-bridge. The middle terminal of the half-bridge of each converter arm 301 is connected to one winding 302a...c of a coupled inductor 303. The second terminals of the windings 302a...c are interconnected and form one of the AC terminals 31 of converter 300. The second AC terminal 31 is directly connected to the midpoint of the DC link, i.e. the node between the two series capacitors.

As shown in fig. 3 the coupled inductor 303 comprises three legs on each of which one of the windings 302a...c is arranged. The windings 302a...c have equal orientation. Because of the parallel and phase shifted operation of the converter arms 301 the instantaneous currents through the windings 302a...c are different as the ripple induced by the high-frequency switching operations of the IGBTs 220 is phase-shifted between the converter arms 301. However, the averaged current through each of the windings 302a...c over several switching periods of the IGBTs 220 is the same, namely the output current of converter 300. This output current varies on the time scale of the output current frequency of typically 50 Hz or 60 Hz and so is almost constant over a few switching periods of the IGBTs 220. With equal orientation of the windings 302a...c and equal average current through them there is no path for common mode flux in the coupled inductor resulting in a low common mode inductivity.

When a fault occurs in one of the converter arms 301, the control unit can respond by removing that converter arm 301 from operation by keeping the IGBTs 220 of that arm permanently off. In this way power converter 300 can continue to operate. As a result of keeping the IGBTs 220 of that converter arm 301 permanently off, the current through its associated winding 302a...c is no longer equal on average to the output current of the converter 300 but instead becomes equal to or almost equal to zero.

Since this removes any electromagnetic force from the associated winding 302a...c, the leg of the coupled inductor carrying that winding 302a...c now forms a return path for common mode flux from the remaining operational converter arms 301. This leads to a large common mode flux in the coupled inductor, possibly saturating its core.

To reduce the described problem the interleaved power converter 300 comprises a bypass switch 304a...c for each of the windings 302a...c. The bypass switches 304a...c are each arranged in parallel to their respective winding 302a...c. In the present example the bypass switches 304a...c are vacuum switches but in other embodiments they may also be other types of mechanical switches or semiconductor switches. If the bypass switches 304a...c are semiconductor switches they must be able to block current of both directions to avoid bypassing the winding 302a...c while a converter arm 301 is operational. Thus, anti-serial (back-to-back) IGBT switches can be used to form a bypass switch 304a...c.

The control unit is arranged to keep the bypass switches turned off, i.e. non-conducting, during normal operation when all converter arms 301 are operational. The control unit is further arranged to detect failures of a converter arm 301, e.g. through a measurement of the output current of the converter 300. If a failure is detected in a converter arm 301, that converter arm 301 is removed from operation. The control unit is arranged to stop any switching operations for that converter arm 301 and keep its IGBTs 220 in a permanent off state, i.e. non-conducting. In addition, the control unit will then turn on the bypass switch 304a...c of that converter arm 301.

Activating the bypass switch 304a...c of a winding 302a...c presents that winding 302a...c with a freewheeling current path which is very short and thus almost free of impedance. Based on Faraday/Lenz's law, the induced current in the shorted winding 302a...c will act to oppose the magnetic field of the remaining operational converter arms 301. Since the impedance in the freewheeling current path is very low it will generate flux that will almost exactly oppose any possible common mode flux generated from the other windings. The result is almost no flux should flow into the bypassed section. The current required to generate this flux will be equal in magnitude to the common mode current flowing in the other windings, i.e. the output current of converter 300.

When the bypass switch 304a...c is activated at a point where some magnetic field has already been built up the current would then oppose a reduction of that magnetic field. In this case the induced current would not be equal to the current in the operational windings 302a...c. However due to losses the field would subsequently decay to a small value. Following that the effects described above would set in and keep common mode flux very small.

The result will be a current in the shorted winding 302a...c equal in magnitude to the common mode current in the other windings, e.g. 50 Hz plus harmonics of the (n-1) order. This current is no larger than the rated current of the converter 300 and so the winding 302a...c will be able to withstand it. The induced current will continue to generate conduction losses in the winding 302a...c and bypass switch 304a...c. Core losses in the coupled inductor core will be minimal since there should be minimal flux in the core. In the other windings 302a...c, the current is no longer shared between three windings and therefore will be higher at the same power rating.

Since no flux will flow through the core of the bypassed windings 302a...c, the differential mode flux in the other windings 302a...c should still sum to zero. Since there will be now only two coupled windings the PWM triangular waveforms of the remaining interleaved converter arms 301 should be operated with an adapted phase shift between them. In the present example the control unit is arranged to adapt the phase shift between the remaining two converter arms 301 to 180°. In other words, the remaining converter arms 301 are operated as if there had been only two converter arms 301 from the start.

Additional flux will flow in the coupled inductor due to the reduced number of used windings which leads to an increased current ripple. It is possible to overrate the inductor core (the flux is constant over the power range of the converter and therefore cannot be reduced by control action) or increase the switching frequency to counteract this.

When a converter arm 301 is removed from operation and the operating power of the converter 300 is unchanged, the total current must be delivered by the remaining converter arms 301 and thus the electric current in the remaining converter arms 301 rises. If the power rating is close to the maximum rated power of the converter 300 this current may be higher than the maximum current that can occur with all converter arms 301 operational. In order to avoid damage to the remaining converter arms 301 it is advantageous to reduce the maximum available power of the converter 300 to a value that keeps the maximum current in the remaining converter arms 301 at the value that the maximum current had with all converter arms 301 active. Alternatively components such as the windings and switches can be rated for a current value that already takes into account a possible reduction of the number of converter arms 301, in other words components of the converter 300 are overrated to the extent necessary to withstand operation with fewer converter arms 301.

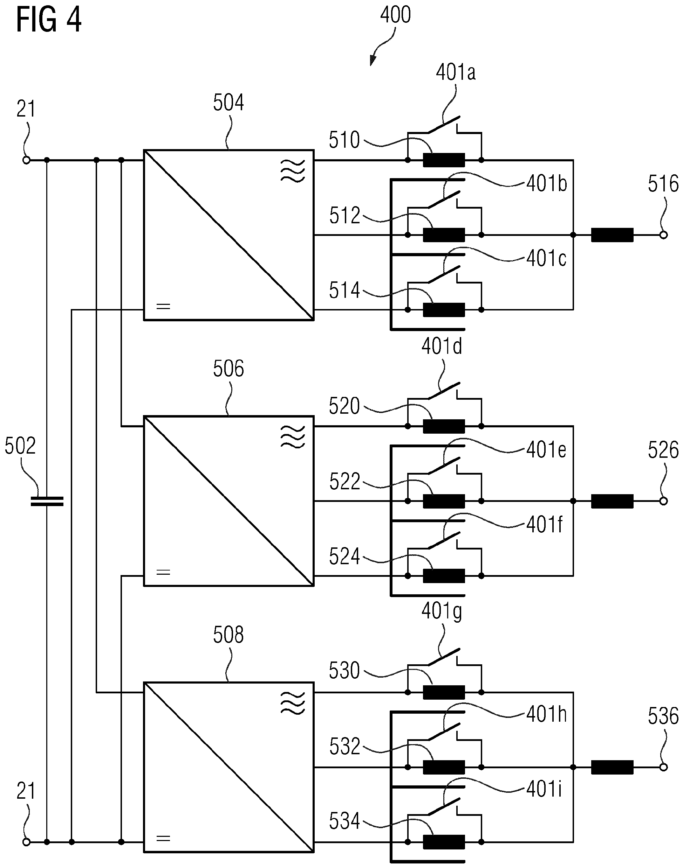

Fig. 4 shows a block diagram of a second embodiment of the invention. The converter 400 of the second embodiment is a three-phase interleaved power converter having one inverter 504, 506, 508 and coupled inductor per phase. Each of the inverters 504, 506, 508 comprises three parallel converter arms 201...209 similar to the setup of fig. 2.

In contrast to converter 500 of figs. 1 and 2 the converter 400 comprises a bypass switch 401a...i for each of its windings 510...534. The control unit of converter 400 operates similarly to the control unit of converter 300. If it detects a failing converter arm 201...209, it removes that converter arm 201...209 from operation and turns on the respective bypass switch 401a...i to short-circuit the respective winding 510...534. In addition, it adapts the phase shift between the remaining converter arms 201...209 of the affected phase. Other phases where all converter arms 201...209 are operational are unaffected and may continue operating normally, i.e. without any changes to their phase shift.

While in the previous description of the embodiments the bypass switches 304a...c, 401a...i were used to enable continued operation with a failing converter arm 301, 201...209, the bypass switches 304a...c, 401a...i may advantageously be used to deactivate a converter arm 301, 201...209 temporarily. In the present embodiment the control unit is further arranged to detect the current operating power used by the power converter 400, e.g. the magnitude of the output current. If this power is below a power threshold, e.g. a current magnitude threshold, it is possible to operate the power converter 400 using only two converter arms 201...209 per phase without exceeding any power or current rating of the elements of the converter 400 such as IGBTs 220 or windings 510...534.

Therefore the control unit is arranged to switch off one converter arm 201...209 per phase temporarily. Much like with a failing converter arm 201...209, the control unit turns off the IGBTs 220 of the affected converter arms 201...209 and turns on the bypass switches 401a...i. It further adapts the phase shift of the remaining converter arms 201...209. Since the current is now routed through fewer semiconductor switches, conduction losses are reduced and operating efficiency increased.

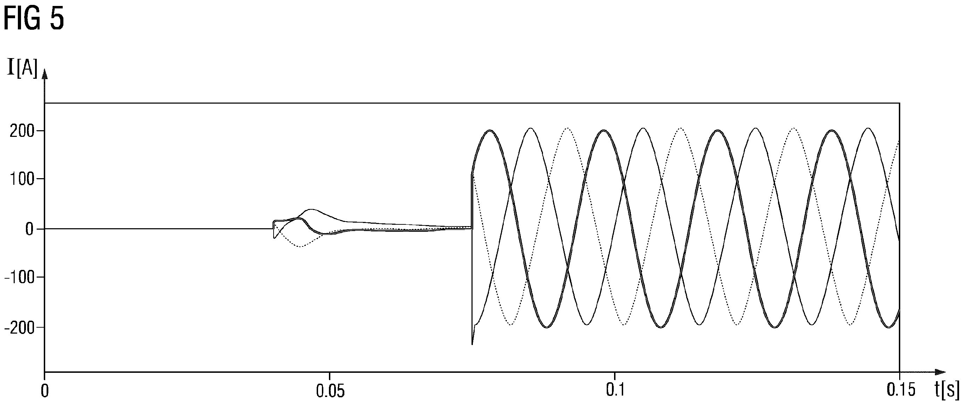

Figs. 5 to 7 are diagrams showing simulation results for a three-phase interleaved converter 400 with three converter arms 201...209 per phase. For the simulation an AC voltage of 400 V, a DC voltage of 720 V, and a peak current of 200 A were used.

Between t = 0.075 s and t = 0.1 s the converter 400 operates normally with all converter arms 201...209 operational. At t = 0.1 s one of the converter arms 201...209 of one phase is turned off and the winding 510...534 is bypassed by activating the associated bypass switch 401a...i. Additionally the modulation is changed to reflect that only two converter arms 201...209 remain in that phase. The converter 400 continues operating after t = 0.1 s at the same power and switching frequency.

The diagram of fig. 5 shows the overall three-phase currents into the grid. It can be seen that there is no visible disturbance after the winding 510...534 is bypassed at 0.1 s.

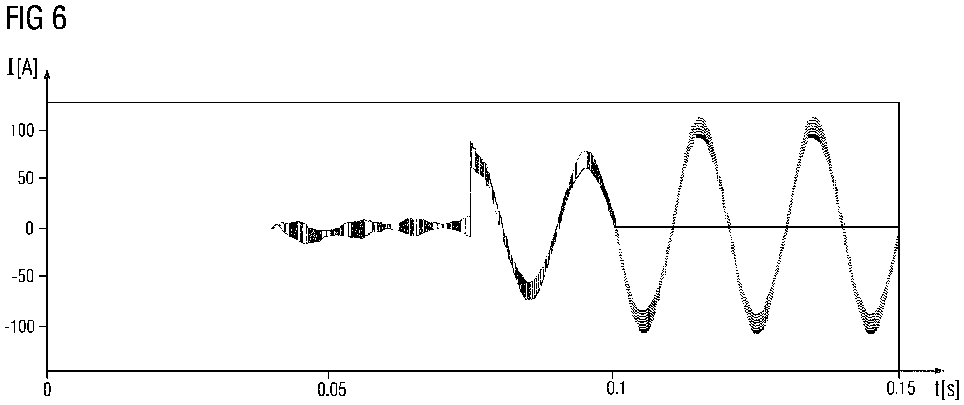

The diagram of fig. 6 shows the currents in the affected phase. As the average current is equal for the converter arms 201...209 of that phase and the current ripple has too high a frequency to make the phase shift visible in fig. 5, the currents are almost undistinguishable in fig. 6. At t = 0.1 s, when one winding 510...534 is bypassed, there is an increase in the current in the other two windings, which is expected as the converter 400 continues operating at full power but the grid current is now split between two windings 510...534 instead of three.

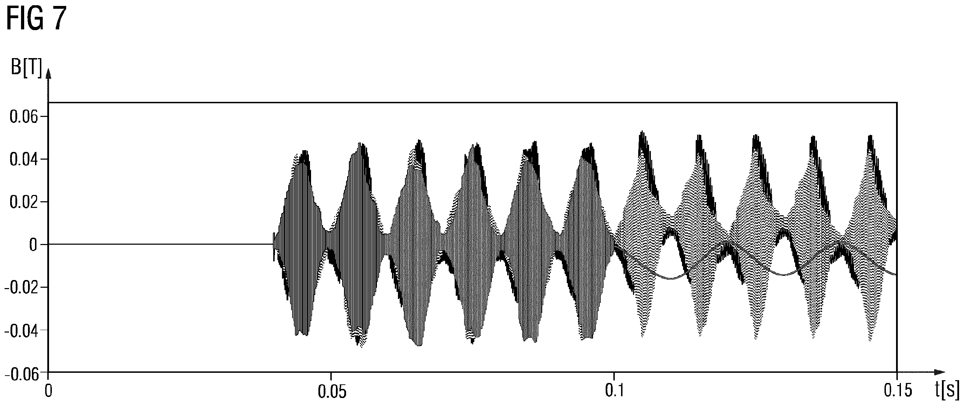

The diagram of fig. 7 shows the magnetic flux density of the core of the coupled inductor. After t = 0.1s, a small, low frequency flux continues to flow in the bypassed core. This is flux is not sufficient to saturate the core. Also, there is now additional flux in the two remaining cores, which requires additional overrating of the inductor. The amount of overrating will depend on the number of core sections, but it can be seen from fig. 7 that this should not add much additional cost or size to the inductor, as the peak flux is increased only by a small amount.

The simulation results show that the proposed method achieves the goal of allowing the interleaved winding 510...534 to be bypassed while avoiding possible issues that could saturate the core. The main additional cost of this method is in the bypass switch 401a...i, which must be rated for the rated power of the converter and generates losses at full power if it is semiconductor-based, but the fact that the converter can maintain operation despite loss of one (or more) interleaved sections more than compensates for this cost due to the improved reliability.

### List of reference numbers

- 21: DC terminals
- 201...209, 301: converter arm
- 220: IGBT
- 221: middle terminal
- 302a...c: winding
- 303: coupled inductor
- 304a...c, 402a...i: bypass switch
- 300, 400, 500: converter
- 502: DC supply
- 504, 506, 508: inverter
- 510...534: inductivity
- 516, 526, 536,: 31 AC terminals

## Claims

1. Interleaved power converter (300, 400, 500) for conversion between alternating current and direct current, comprising
- DC terminals (21) and AC terminals (31), the DC terminals (21) being connected by a DC link comprising one or more capacitors (502),
- two or more converter arms (201...209, 301) being arranged parallel to each other and parallel to the DC link, the converter arms (201...209, 301) each comprising at least two semiconductor switches (220),
- a control unit arranged to control the semiconductor (220) switches for interleaved power converter operation,
- a coupled inductor (303) comprising a winding (302a...c) for each of the converter arms (201...209, 301), a first terminal of each of the windings (302a...c) being connected to a respective converter arm (201...209, 301) and the second terminals of the windings (302a...c) being interconnected,
- a bypass switch (304a...c, 402a...i) arranged in parallel to at least one of the windings (302a...c) .

2. The interleaved power converter (300, 400, 500) of claim 1 comprising for each of the windings (302a...c) a respective bypass switch (304a...c, 402a...i) arranged in parallel to the respective winding (302a...c) .

3. The interleaved power converter (300, 400, 500) of claims 1 or 2 wherein the control unit is arranged to detect a failing converter arm (201...209, 301) and is further arranged upon detection of a failing converter arm (201...209, 301) to set the bypass switch (304a...c, 402a...i) of the winding (302a...c) associated with the failing converter arm (201...209, 301) to a conducting state.

4. The interleaved power converter (300, 400, 500) of any of the preceding claims wherein the control unit is arranged to detect if the current operating power is below a power threshold and is further arranged upon detection of a power below the power threshold to select one or more converter arms (201...209, 301) and deactivate these converter arms (201...209, 301) by disabling the switching of the semiconductor switches (220) of these converter arms (201...209, 301) and setting the bypass switch (304a...c, 402a...i) of the windings associated with these converter arms (201...209, 301) to a conducting state.

5. The interleaved power converter (300, 400, 500) of any of the preceding claims wherein the bypass switch (304a...c, 402a...i) is a mechanical switch, particularly a vacuum switch.

6. The interleaved power converter (300, 400, 500) of any of claims 1 to 4 wherein the bypass switch (304a...c, 402a...i) is a semiconductor switch capable of blocking an AC voltage, particularly an anti-serial connection of two semiconductor switches such as IGBTs.

7. The interleaved power converter (300, 400, 500) of any of the preceding claims wherein the control unit is arranged upon detecting a failing converter arm (201...209, 301) to change the phase shift used for the parallel converter arms (201...209, 301) to a phase shift associated with the remaining number of functional converter arms (201...209, 301), particularly 360 ° / n, where n is the remaining number of functional converter arms (201...209, 301).

8. The interleaved power converter (300, 400, 500) of any of the preceding claims wherein the bypass switch (304a...c, 402a...i) has a power rating equal to or higher than the power rating of the interleaved power converter (300, 400, 500).

9. The interleaved power converter (300, 400, 500) of any of the preceding claims wherein the control unit is arranged upon detecting a failing converter arm (201...209, 301) to reduce the maximum power of the power converter.

10. The interleaved power converter (300, 400, 500) of any of the preceding claims wherein the converter arms (201...209, 301) form a first phase circuit and the power converter (300, 400, 500) comprises a second and third phase circuit, the second and third phase circuits each comprising second and third converter arms (201...209, 301) having second and third windings (302a...c) .
